# FASCICULE DE BREVET EUROPEEN

(11) **EP 2 399 020 B1**
(45) Date de publication et mention de la délivrance du brevet: **03.08.2016**
(21) Numéro de dépôt: 10707319.9
(22) Date de dépôt: 19.01.2010
(51) Int. Cl.: F02N 11/08, H02J 7/34

(54) **PROCEDE DE SECURISATION DU FONCTIONNEMENT D'UN DISPOSITIF DE MAINTIEN EN TENSION D'UN VEHICULE**
VERFAHREN ZUR SICHERUNG DES BETRIEBS EINES SPANNUNGSERHALTUNGSGERÄTES FÜR EIN FAHRZEUG
METHOD FOR SECURING THE OPERATION OF A VOLTAGE-HOLDING DEVICE FOR A VEHICLE

(30) Priorité: 19.02.2009 FR 0951076
(43) Date de publication de la demande: 28.12.2011
(73) Titulaire: Peugeot Citroën Automobiles Société Anonyme, 78140 Vélizy Villacoublay (FR)
(72) Inventeur: DAUNAS, Olivier, F-95000 Pontoise (FR)
(74) Mandataire: Ménès, Catherine
(86) Numéro de dépôt international: PCT/FR2010/050078
(87) Numéro de publication internationale: WO 2010/094869

(56) Documents cités:
- EP-A1- 1 715 178
- DE-A1-102004 016 292
- DE-A1-102007 027 498
- FR-A1- 2 829 308
- US-A1- 2004 124 811
- US-B1- 6 275 001

## Description

La présente invention concerne la sécurisation de fonctionnement des dispositifs de maintien en tension des réseaux de bord des véhicules, notamment automobiles.

Les accessoires consommateurs d'énergie électrique tendent à être de plus en plus nombreux dans les véhicules automobiles. On peut citer à titre d'exemples les climatiseurs ou les directions assistées ou encore les dispositifs d'arrêt et de redémarrage automatiques des moteurs thermiques, systèmes couramment appelés «Stop & Start ». Par exemple, ces derniers peuvent comporter un alternateur réversible, ou « alterno-démarreur », permettant de redémarrer le moteur thermique et de récupérer l'énergie cinétique lorsque le véhicule décélère et de transformer cette énergie en énergie électrique utilisée pour recharger la batterie.

De tels équipements, qui permettent de remettre en marche le moteur thermique, ont des besoins énergétiques élevés, nécessitant une forte puissance électrique, ce qui se traduit par des courants électriques importants. Cette demande de puissance doit cependant être satisfaite sans pour autant surdimensionner les moyens d'alimentation électrique et sans pour autant provoquer une chute de tension sur le réseau de bord, ce qui se traduirait par une perception de mauvaise qualité du véhicule et une diminution passagère du couple moteur.

Pour résoudre ces problèmes, on a alors proposé d'ajouter une source d'énergie auxiliaire, telle qu'une deuxième batterie connectée au réseau de bord. Cependant, cette solution est relativement onéreuse et nécessite de la place-sous le capot ou dans le coffre du véhicule.

Une autre solution consiste à rajouter dans le réseau un second moyen de stockage d'énergie électrique, tels que des condensateurs de forte capacité (par exemple 300F). Cette solution peut être utilisée en plus de la batterie classique 12V pour les démarrages et redémarrages et pour alimenter les accessoires consommateurs électriques connectés au réseau. La valeur élevée de ce condensateur provoque des inconvénients difficiles à éviter, par exemple l'échauffement par effet Joule des conducteurs électriques.

Les demandes de brevet FR 2 853 154 et FR 2829308 proposent un système d'alimentation en énergie électrique de type « DMT » (Dispositif de Maintien en Tension ou « DMTC » pour Dispositif de Maintien en Tension Centralisé) permettant de stabiliser la tension du réseau de bord. Ces dispositifs de maintien de tension électrique se révèlent pratiquement indispensables lorsque le véhicule est équipé d'un système Stop & Start.

Le dispositif de maintien en tension, utilisé pendant les phases de redémarrage du moteur thermique, doit être activé et désactivé rapidement afin d'éviter des surtensions ou des sous-tensions au niveau du réseau de bord. Par exemple, le surcroit de tension apporté par le second moyen de stockage d'énergie, tels que les super-condensateurs, au moment du redémarrage du moteur, peut être de l'ordre de 4 ou 5 Volts qui s'ajoutent aux 12 Volts fournis par la batterie. Ce surcroit de tension doit bien entendu être rapidement supprimé lorsque la phase de redémarrage est terminé, sous peine d'endommager des consommateurs électriques qui ne supporteraient pas une tension de l'ordre de 12 Volts, plus 4 ou 5 Volts. Le DMT ne doit donc pas être mis à contribution lorsque ce n'est pas nécessaire.

La présente invention propose de sécuriser les fenêtres où le DMTC est susceptible à s'activer (condition spécifique de tension par exemple). Cela permet au DMTC de ne pas s'activer d'une façon intempestive en dehors de ces fenêtres. Ces fenêtres étant les phases de démarrage et redémarrage.

De façon plus précise, l'invention concerne un procédé de sécurisation du fonctionnement d'un dispositif de maintien en tension (DMT) utilisé pour le démarrage ou redémarrage du moteur thermique d'un véhicule selon la revendication 1, ledit dispositif étant électriquement relié par un réseau de bord à une machine électrique et à un calculateur. Selon l'invention, ledit dispositif de maintien en tension ne peut être activé que s'il a préalablement reçu un message d'autorisation d'activation.

Ce dernier peut être un message de démarrage ou de redémarrage envoyé par ledit calculateur à ladite machine électrique et audit dispositif de maintien en tension ou un message émis par ladite machine électrique informant qu'elle va redémarrer ledit moteur thermique.

Ledit calculateur peut émettre un message d'arrêt du démarrage ou redémarrage dudit moteur ce qui a pour effet de désactiver le dispositif de maintien en tension DMT.

La machine électrique peut également émettre un message d'indication d'arrêt du démarrage ou redémarrage ce qui a pour effet de désactiver le DMT.

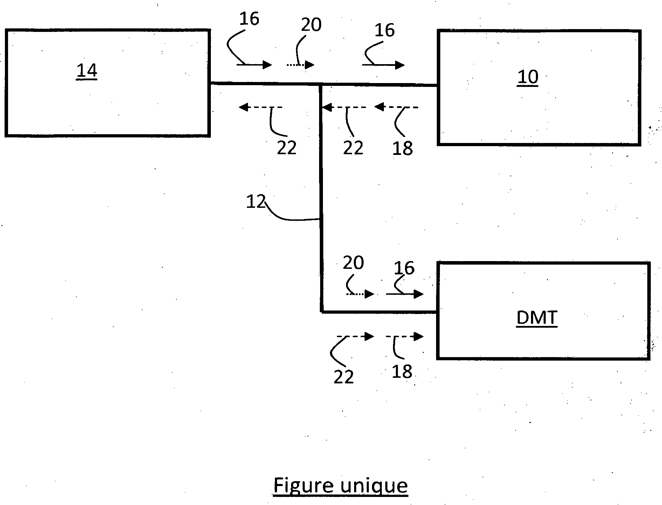

D'autres avantages et caractéristiques de l'invention apparaîtront au cours de la description qui suit d'un mode de réalisation de l'invention, donné à titre d'exemple non limitatif, en référence aux dessins annexés et sur lesquels la figure unique illustre schématiquement le procédé de l'invention.

Sur la figure unique, un dispositif de maintien en tension (DMT) est électriquement connecté à une machine électrique 10 par un réseau de bord 12 d'un véhicule automobile. Ce dernier comporte de façon habituelle une batterie (non représentée, généralement de 12 Volts) connectée à la machine électrique 10 ainsi qu'au dispositif de maintien en tension DMT. La machine électrique 10 peut être par exemple un alterno-démarreur lorsque le véhicule est équipé d'un système d'arrêt et de redémarrage automatique du moteur thermique du véhicule (système Stop & Start) ou simplement un démarreur pour démarrer le moteur. Le DMT peut être constitué par exemple par des super-capacités et un convertisseur DC/DC. Lors des phases de démarrage ou redémarrage du moteur thermique, les super-capacités sont mises en série avec la batterie du véhicule de façon à fournir le supplément de puissance électrique requise pour que la machine électrique puisse fournir un couple mécanique important nécessaire au démarrage ou redémarrage du moteur. En dehors de ces phases de démarrage ou redémarrage, les super-capacités sont connectées en parallèle avec la batterie de façon à les recharger à travers le convertisseur DC/DC.

Le réseau multiplexé 12 peut être un réseau normalisé, par exemple de type CAN, LIN ou FLEXRAY.

Un calculateur 14, par exemple le calculateur de supervision du fonctionnement du moteur thermique, pilote le fonctionnement de la machine électrique et du DMT. Lorsque la machine électrique et/ou le DMT comporte un calculateur, le calculateur 14 peut être remplacé par le ou les calculateurs de la machine électrique et/ou du DMT. Lorsqu'il est nécessaire de démarrer ou redémarrer le moteur, le calculateur demande le démarrage ou redémarrage en envoyant un message d'autorisation d'activation 16 à la machine 10 et au DMT par l'intermédiaire du réseau 12. Ce message d'autorisation 16 peut être un ordre effectif de démarrage ou redémarrage ou une demande de préparation de la machine électrique au démarrage ou redémarrage. Par exemple, la demande de préparation peut correspondre, avec un alterno-démarreur, au pré-fluxage du rotor, selon lequel un courant est envoyé dans le circuit du rotor de façon à le magnétiser.

La machine électrique peut elle-même indiquer qu'elle va redémarrer, si elle possède des informations que le calculateur 14 n'a pas. Dans ce cas, elle envoie à travers le réseau 12, un message d'autorisation d'activation 18 au calculateur 14 et au DMT.

En recevant un message d'autorisation d'activation 16 ou 18, le DMT peut être activé, à condition que ses propres conditions d'activation soient validées. Par exemple, le DMT peut surveiller le courant qui le traverse : à l'arrêt du véhicule, le DMT voit tout le courant circulant dans le réseau de bord. S'il y a une demande de démarrage ou redémarrage, le courant électrique traversant le DMT augmente et si ce courant est supérieur à un seuil prédéterminé le DMT connecte les super capacités en série avec la batterie ; dans le cas contraire, les super capacités ne sont pas connectées. La réception par le DMT d'un message d'autorisation d'activation ne signifie pas qu'il doit s'activer mais signifie qu'il peut être activé (généralement sous réserve que d'autres conditions soient réunies).

Le DMT est donc autorisé à s'activer, soit sur réception d'un ordre d'autorisation de démarrage ou redémarrage du calculateur de supervision 14, soit sur réception d'un état de la machine électrique 10 indiquant le démarrage ou redémarrage.

Inversement, le calculateur 14 peut émettre un message 20 d'arrêt du démarrage ou redémarrage du moteur ou la machine électrique peut émettre un message 22 d'indication d'arrêt du démarrage ou redémarrage. Ces messages correspondent à des messages d'interdiction d'activation du dispositif de maintien en tension DMT qui ont pour effet de désactiver le DMT (interdiction de connecter les super capacités en série avec la batterie).

Selon l'invention, ce dernier est donc autorisé à s'activer uniquement pendant la fenêtre temporelle où la machine électrique est autorisée à démarrer ou à redémarrer. Cela permet d'éviter la mise en série intempestive du DMT avec la batterie pendant les phases où la tension de la batterie est nominale. Ce déclenchement intempestif, provoquant des surtensions, pourrait avoir pour conséquence de diminuer la duré de vie de la batterie ou même de la détruire, ainsi qu'éventuellement le réseau de bord et /ou les accessoires connectés au réseau. L'invention permet donc de sécuriser la mise en série du DMT avec la batterie et donc de sécuriser son fonctionnement.

D'autres modes de réalisation que ceux décrits et représentés peuvent être conçus par l'homme du métier sans sortir du cadre de la présente invention.

## Revendications

1. Procédé de sécurisation du fonctionnement d'un dispositif de maintien en tension (DMT) constitué par des super-capacités et un convertisseur DC/DC, ledit dispositif étant utilisé pour le démarrage ou redémarrage du moteur thermique d'un véhicule, le véhicule comprenant une batterie connectée à une machine électrique (10) ainsi qu'audit dispositif (DMT), ledit dispositif étant relié, par un réseau multiplexé (12), à la machine électrique (10) et à un calculateur (14), le procédé étant **caractérisé en ce que** ledit dispositif de maintien en tension (DMT) ne peut être activé en mettant les super-capacités en série avec la batterie que s'il a préalablement reçu par le réseau multiplexé un message (16, 18) d'autorisation d'activation.

2. Procédé selon la revendication 1 **caractérisé en ce que** ledit message d'autorisation d'activation est un message de démarrage ou de redémarrage (16) envoyé par ledit calculateur (14) à ladite machine électrique (10) et audit dispositif de maintien en tension DMT.

3. Procédé selon la revendication 1 **caractérisé en ce que** ledit message d'autorisation d'activation est un message (18) émis par ladite machine électrique (10) informant qu'elle va redémarrer ledit moteur thermique.

4. Procédé selon l'une des revendications précédentes **caractérisé en ce que** ledit calculateur (14) peut émettre un message (20) d'arrêt du démarrage ou redémarrage dudit moteur ce qui a pour effet de désactiver le dispositif de maintien en tension (DMT) en mettant les super-capacités en parallèle avec la batterie.

5. Procédé selon l'une des revendications précédentes **caractérisé en ce que** la machine électrique peut émettre un message (22) d'indication d'arrêt du démarrage ou redémarrage ce qui a pour effet de désactiver le dispositif de maintien en tension (DMT) en mettant les super-capacités en parallèle avec la batterie.

## Patentansprüche

1. Verfahren zur Sicherung des Betriebs einer Spannungserhaltungsvorrichtung (DMT), gebildet von Superkapazitäten und einem DC/DC-Wandler, wobei die Vorrichtung zum Starten oder Neustarten des Verbrennungsmotors eines Fahrzeugs verwendet wird, wobei das Fahrzeug eine Batterie umfasst, die an eine elektrische Maschine (10) sowie an die Vorrichtung (DMT) angeschlossen ist, wobei die Vorrichtung anhand eines Multiplexnetzes (12) mit der elektrischen Maschine (10) und einem Rechner (14) verbunden ist, wobei das Verfahren **dadurch gekennzeichnet ist, dass** die Spannungserhaltungsvorrichtung DMT durch Setzen der Superkapazitäten in Reihe mit der Batterie nur dann aktivierbar ist, wenn sie zuvor vom Multiplexnetz eine Aktivierungsgenehmigungsnachricht (16, 18) erhalten hat.

2. Verfahren nach Anspruch 1, **dadurch gekennzeichnet, dass** die Aktivierungsgenehmigungsnachricht eine Start- oder Neustartnachricht (16) ist, die vom Rechner (14) an die elektrische Maschine (10) und an die Spannungserhaltungsvorrichtung DMT geschickt wird.

3. Verfahren nach Anspruch 1, **dadurch gekennzeichnet, dass** die Aktivierungsgenehmigungsnachricht eine Nachricht (18) ist, die von der elektrischen Maschine (10) geschickt wird und informiert, dass sie den Verbrennungsmotor neu starten wird.

4. Verfahren nach einem der vorangehenden Ansprüche, **dadurch gekennzeichnet, dass** der Rechner (14) eine Stoppnachricht (20) des Starts oder Neustarts des Motors senden kann, was die Deaktivierung der Spannungserhaltungsvorrichtung DMT durch Parallelschalten der Superkapazitäten mit der Batterie bewirkt.

5. Verfahren nach einem der vorangehenden Ansprüche, **dadurch gekennzeichnet, dass** die elektrische Maschine eine Signalnachricht (22) des Stopps des Starts oder Neustarts senden kann, was die Deaktivierung der Spannungserhaltungsvorrichtung DMT durch Parallelschalten der Superkapazitäten mit der Batterie bewirkt.

## Claims

1. Method for protecting the functioning of a voltage maintenance device (DMT) formed by supercapacitors and a DC to DC converter, said device being used for starting or restarting a thermal engine of a vehicle, the vehicle comprising a battery connected to an electrical machine (10) as well as to said device (DMT), said device being connected, by a multiplexed network (12), to the electrical machine (10) and to a computer (14), the method being **characterised in that** said voltage maintenance device (DMT) can be activated by putting the supercapacitors in series with the battery only if it has previously received, through the multiplexed network, an activation-enable message (16, 18).

2. Method according to claim 1, **characterised in that** said activation-enable message is a start or restart message (16) sent by said computer (14) to said electrical machine (10) and to said voltage maintenance device (DMT).

3. Method according to claim 1, **characterised in that** said activation-enable message is a message (18) sent by said electrical machine (10) informing that it will restart said thermal engine.

4. Method according to one of the preceding claims, **characterised in that** said computer (14) can send a message (20) stopping the starting or restarting of said engine, which has the effect of deactivating the voltage maintenance device (DMT) by putting the supercapacitors in parallel with the battery.

5. Method according to one of the preceding claims, **characterised in that** the electrical machine can send a message (22) indicated stoppage of the starting or restarting, which has the effect of deactivating the voltage maintenance device (DMT) by putting the supercapacitors in parallel with the battery.
